# EUROPEAN PATENT APPLICATION

(11) **EP 3 057 019 A1**
(43) Date of publication of application: **17.08.2016**
(21) Application number: 15305213.9
(22) Date of filing: 13.02.2015
(51) Int. Cl.: G06F 21/12

(54) **Method and device for protecting an application and method and device for executing a protected application thus protected**

(71) Applicant: Thomson Licensing, 92130 Issy-les-Moulineaux (FR)
(72) Inventor: Salmon-Legagneur, Charles, 35576 Cesson Sévigné (FR); Monisfrot, Antoine, 35576 Cesson-Sévigné (FR)
(74) Representative: Browaeys, Jean-Philippe

(57) **Abstract**

An application comprising a code part is protected in a device (200) including a processor (211) that encrypts (S104) the code part to be protected to obtain a protected part using an encryption key, replaces (S108) the code part to be protected by valid instructions different from the code part to be protected, stores (S110, S112) information necessary for decryption of the protected part so that the information may be retrieved by an unprotection function, stores (S114) the unprotection function so that the unprotection function can be called by a calling function, and inserts (S114) calls to the unprotection function and a protection function around a call to the code part to be protected in the application, the protection function being configured to protect the code part. When executed, a call to the unprotection function decrypts the protected part which is written over the valid instructions where it is executed.

## Description

### TECHNICAL FIELD

The present disclosure relates generally to computer systems and in particular to encryption and decryption of software code in such systems.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Today, most applications to be executed in the Android operating system are written in Java. To distribute and install application software onto the Android operating system a file format called APK - Android Application PacKage - is used. To make an APK file, a program for Android is first compiled to an intermediate language, and then its parts are packaged into a compressed archive file (ZIP format). The archive file contains the program code in a single DEX (Dalvik EXecutable code) file, various resources (e.g. image files), and the manifest of the APK file. The archive file includes two additional files: CERT.SF and CERT.RSA. CERT.SF contains cryptographic hashes of all other archive files; CERT.RSA contains the public key used for signature verification.

Some specificities of the Java language - it is declarative and introspective - make Android applications very easy to reverse-engineer and also vulnerable to tampering attacks. That is why, today, many solutions try to ensure the confidentiality of the code of Android applications with, for example, high intellectual property value. For this purpose, different prior art techniques are used.

The most common way to secure Android applications is to use a Java obfuscation tool. The most famous tool is called Proguard and it is included in the Android software development kit (SDK). This tool is used before the code is compiled from Java to byte code. Basically, it is only a mangling pre-processor that renames classes, variables and functions to abstract names, in order to suppress all meaningful textual information in the Java code. However, this process is only effective for about 70% of the code, because calls to Android base Java classes and functions cannot be stripped and must remain unobfuscated. The remaining unobfuscated information is usually sufficient for reverse-engineering. Many hacking tools, like apktool and basksmali, can deobfuscate applications protected using Proguard by performing the inverse method: disassemble the application from byte code to a so-called smali representation (baksmali) and then use this to rebuild a readable Java source code.

Another protection technique involves dynamically loading additional byte code modules at runtime. Once Java is compiled into byte code, it produces a so called DEX file (Dalvik EXecutable code) that is very close to Sun OS java byte code, except for the container format. The Android Dalvik Virtual Machine (DVM) loads the DEX file to run the application and an Android API DexClassLoader can be used to load and execute additional code from a DEX file on an external SD card or in a private directory. The main advantage of this approach is that at least some of the additional code can be stored encrypted, loaded on demand and deciphered into memory. There is however one important drawback: once the encrypted DEX code has been decrypted and loaded into memory, it remains in the clear and can thus be intercepted with any Java Debug Wire Protocol (JDWP) Java debugger. The protection is thus robust against static analysis tool and Java decompilers, but does not resist against dynamic analysis tools, debuggers etc.

For Java platforms, the Sun.misc.unsafe library offers an API to self-modify the Java byte code in memory. Some Java secure loaders use this API to decrypt encrypted Java code. However, as will be further explained, there are some differences between Android and Java platforms, like an additional optimization phase and a Java byte verifier code that are called at the launch of the application. This solution, applied to an Android device, would lead to errors since the Dalvik Java Virtual Machine (JVM) will interpret the encrypted code as invalid Java code.

Another solution for modifying the Java code in memory involves calling an external native component, which accesses and dynamically modifies the byte code in the memory at run time. This external component must be a shared native library, included in the package of the application. The application can communicate with it through a Java native interface (JNI) as explained by Patrick Schulz in Code Protection in Android.

As already mentioned, Android applications are distributed as DEX files in an interpreter portable format. This binary format must execute on a large set of devices with different architectures and characteristics: ARM, x86, MIPS, Little/Big Endian etc. In order to improve performance, the DEX code is modified at the first use of the application to produce the ODEX that is optimized for the target device. During optimization, various things can be modified in the code: instructions can be replaced by others, the alignment of instructions may be changed, the byte order can be swapped, and so on.

Because Java is a declarative language, a DEX file contains many structures of declarative information in addition to the byte code: list of class names and attributes, names of functions, strings table, declaration of the number of registers used by each function, et cetera. In addition, byte code instructions may contain operands whose values very often refer to other sections in the DEX. For example the instruction invoke_virtual{var,method_index} allows to call a method which has been declared in the method list of the DEX. Another example: putting a string in a local variable vo, can be done using the instruction const string {vo, string_index}, where string_index refers to the local string table.

This means that the byte code is strongly linked to other tables in the DEX, and it is not possible, just like in any other native language, to inject calls to new functions, to declare new string constants etc.. All strings and methods are statically pre-declared in some structures of the DEX.

Given these specificities, it is not possible simply to modify the dalvik byte code with increased code protection as a goal. While this seems simple, the prior art techniques for native language (for example x86), like dynamic deciphering, cannot easily be transposed to the Java interpreted language. A main problem is that it simply is not possible to paste byte code instructions at a random offset in the memory and then execute them. Firstly, due to the Java language limitations, the new instructions must be injected in the body of a pre-declared function. Secondly, all relative information of the injected byte code instructions, like offsets operand, strings identifiers, methods identifiers, must be fully compliant with the DEX framework and existing linked data tables. The number of local registers, and the size of the function cannot be changed as they are declared in headers and managed internally by the DVM engine in internal private structures.

Nor is it possible to deliver a protected application APK with functions containing encrypted code since, contrary to native language (x86), in Java code one cannot create a dead code location where the encrypted code is to be inserted. All instructions in a Java function are systematically byte-verified by the DVM engine at launch time, so the encrypted code will be rejected.

It will be appreciated that it is desired to have a solution that overcomes at least part of the problems related to the protection of interpreted code applications. The present disclosure provides such a solution.

### SUMMARY OF DISCLOSURE

In a first aspect, the present principles are directed to a device for protecting an application comprising a code part to be protected. The device comprises an interface configured to receive the application and to output a protected application and a processing unit configured to encrypt the code part to be protected to obtain a protected part using an encryption key, replace the code part to be protected by valid instructions different from the code part to be protected, store information necessary for decryption of the protected part so that the information may be used by an unprotection function configured to decrypt the protected part, store the unprotection function and a protection function so that the unprotection function and the protection function can be called by calling functions, and insert calls to the unprotection function and the protection function around a call to the code part to be protected in the application, the protection function being configured to protect the code part.

In a second aspect, the present principles are directed to a method for protecting an application including a code part to be protected. A processor encrypts the code part to be protected to obtain a protected part using an encryption key, replaces the code part to be protected by valid instructions different from the code part to be protected, stores information necessary for decryption of the protected part so that the information may be retrieved by an unprotection function configured to decrypt the protected part, stores the unprotection function so that the unprotection function can be called by a calling function, and inserts calls to the unprotection function and a protection function around a call to the code part to be protected in the application, the protection function being configured to protect the code part.

Various embodiments of the second aspect include:
- That the information necessary for decryption of the protected part is stored in a non-executable part of the application.
- Storing the protection function in the application so that the protection function can be called by a calling function, the protection function being configured to overwrite a decrypted protected part in the memory by valid instructions.
- That the unprotection function is stored in the application.
- Storing the protected part in a non-executable part of the application.
- That the information necessary for decryption of the protected part includes an encryption seed for the protected part, an offset of the code part to be protected and an identifier of a class name or a function name of the protected part.
- That the application is implemented as Dalvik executable code.

In a third aspect, the present principles are directed to a method for executing an application including a protected part. A processor calls an unprotection function with an identifier of the protected part, retrieves information necessary for decryption of the protected part, decrypts the protected part using the information to obtain an unprotected part, overwrites, in memory, instructions in the application with the unprotected part, executes the unprotected part in the memory, and protects the unprotected part in the memory.

In a fourth aspect, the present principles are directed to a device for executing an application comprising a protected part. The device includes memory storing the application and a processor configured to call an unprotection function with an identifier of the protected part, retrieve information necessary for decryption of the protected part, decrypt the protected part using the information to obtain an unprotected part, overwrite, in the memory, instructions in the application with the unprotected part, execute the unprotected part in the memory, and protect the unprotected part in the memory.

In a fifth aspect, the present principles are directed to a non-transitory storage medium on which is stored instructions that when executed by a processor causes to processor to call an unprotection function with an identifier of the protected part, retrieve information necessary for decryption of the protected part, decrypt the protected part using the information to obtain an unprotected part, overwrite, in the memory, instructions in the application with the unprotected part, execute the unprotected part in the memory, and protect the unprotected part in the memory.

### BRIEF DESCRIPTION OF DRAWINGS

Preferred features of the present disclosure will now be described, by way of non-limiting example, with reference to the accompanying drawings, in which
Figure 1 illustrates an exemplary method according to an embodiment of the present principles;
Figure 2 illustrates an exemplary post-build tool according to a preferred embodiment of the present principles;
Figure 3 illustrates an example of how initial DEX code is transformed by the post-build tool according to a preferred embodiment of the present principles;
Figure 4 illustrates an exemplary method of execution of protected code according to a preferred embodiment of the present principles; and
Figure 5 illustrates code unprotection in a different way.

### DESCRIPTION OF EMBODIMENTS

The present principles provides protection of code in a DEX file through the use of dynamic in-place transformation of DEX byte code in memory.

The source code of the DEX to protect is preferably modified in the development phase to call a native protection library at one or more check points. The native protection library (that will be further described) offers two API functions, unprotect() and protect() to respectively unprotect and protect an encrypted module. unprotect() is thus called before execution of protected code and protect() is called after execution.

The application is built as usual with android SDK and the application package is modified in the post-build chain.

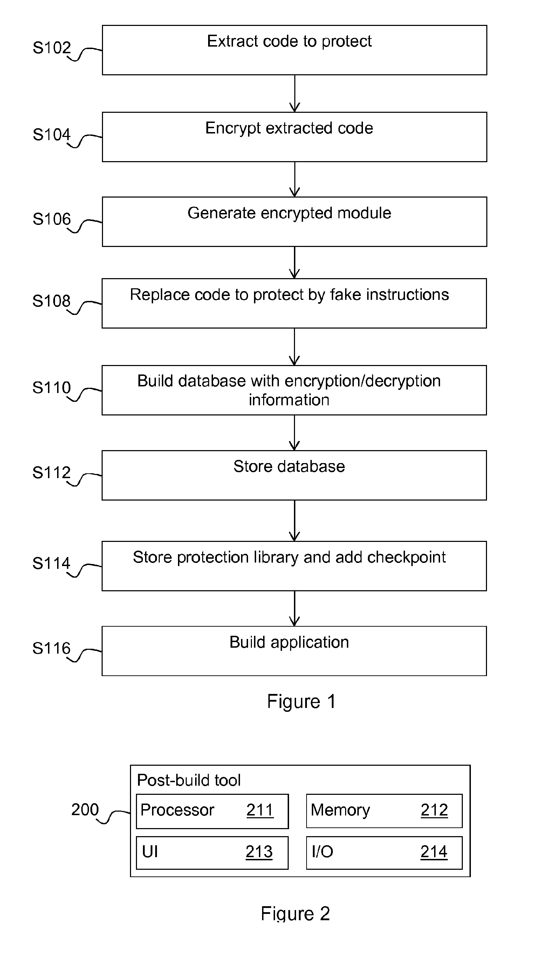

A DEX file is preferably protected in a post-build tool using a post-build method, illustrated in Figure 1, at development time.

The post-build tool first extracts S102 the parts of code to protect from the code section of the original DEX file. This can be achieved in different ways. The simplest way is to consult a configuration file that lists classes and methods to be protected. The preferred way is for the post-build tool to search for markers in the Java source file, the markers having been put in by for example the programmer; Java Annotation API allows for the insertion of markers that will be present in the generated DEX code and that thereafter can be interpreted by the post-build tool.

Each code part to be protected is then encrypted S104 by the post-build tool using, preferably, a symmetric encryption algorithm such as for example AES-128 or RC5. An encryption key can be used to encrypt one or more code parts; several parts may thus share an encryption key. The encryption key is advantageously computed using a key derivation function (KDF) as is well known in the art. The KDF may for example take for input a random container seed and a hash of the DEX headers.

An encrypted module is then generated S106 for each encrypted part. These modules are added to a resource accessible by the application. It is preferred that the secure encrypted modules are added in a non-executable part, advantageously the DATA section, of the DEX and that the DEX headers are modified accordingly, but they could also be placed in external resource files. An advantage of having them in the DEX file is that they then are preloaded in memory; if there are frequent transfers from encrypted modules to DEX code sections (which will be described), it is advantageous them in memory for performance and stealth reasons. For the same reasons, the secure encrypted modules could also advantageously be included in the native shared library (which also will be described).

In the DEX file, each code part to be protected is replaced S108 with fake but valid Java instructions of the same size. 'Fake' means that these instructions are different from the original instructions. 'Valid' means that these functions are accepted as real Java instructions that will be accepted by the Dalvik byte code verifier. The fake functions may for example be no-op operations.

The post-build tool builds S110 a database, that holds the encrypted modules as well as and information and credentials seeds to decrypt them. For each encrypted module the database preferably includes:
- The encryption seed for the module, i.e., input to the KDF that cannot be calculated in another way (e.g. by hashing the DEX headers).
- The initial offset of the original code part in the DEX file, i.e., information that locates the original code part in the DEX file.
- An opaque and unique identifier of the class name or function name that is protected. The identifier may for example by an id derived from the Java class or method-id (referenced in the DEX header), or a hash value calculated from the class name or function name.

The database may also include the relative offset of the encrypted module in the DEX file.

The database is preferably inserted S112 into a non-executable area of the DEX and a code for a protection library is inserted S114 in a native shared library of the protected application while a checkpoint is added to the DEX. The shared library exposes a protection library API through the Java Native Interface framework (JNI). The protection library is configured to have access to the content of the DEX in memory and to make in-place transformation of code belonging to protected functions. The JNI API is designed to be stealthy, by manipulating only opaque identifiers. These opaque identifiers do not reveal names or addresses of functions that may be dynamically changed by the protection library. The checkpoint includes calls to the unprotect() function, the protected function, and the protect() function. Since the call to the protected function normally is in the code already, it is usually sufficient to surround this call by the calls to unprotect() and protect() functions.

Then the final application package (APK) is rebuilt S116 using an Android packaging tool. The APK includes the modified DEX file plus optional resources files. The APK can then be output to, for example, a non-transitory storage medium such as a CD-ROM or a Flash memory for storage of the APK. Such a non-transitory storage medium thus stores the application at least until the application is to be executed.

As will be appreciated, the post-build tool operates on a DEX file generated by the Android SDK. It is preferred that the post-build tool preserves the overall mapping of classes and functions in the DEX file in order to avoid DEX decompilation and recompilation.

Figure 2 illustrates an exemplary post-build tool 200 that includes at least one hardware processing unit ("processor") 211, memory 212, a user interface 213 for interacting with a user, and at least one communications interface 214 for receiving a DEX file to protect and for outputting a protected DEX file. The skilled person will appreciate that the illustrated device is very simplified for reasons of clarity and that real devices in addition would comprise features such as power supplies and persistent storage.

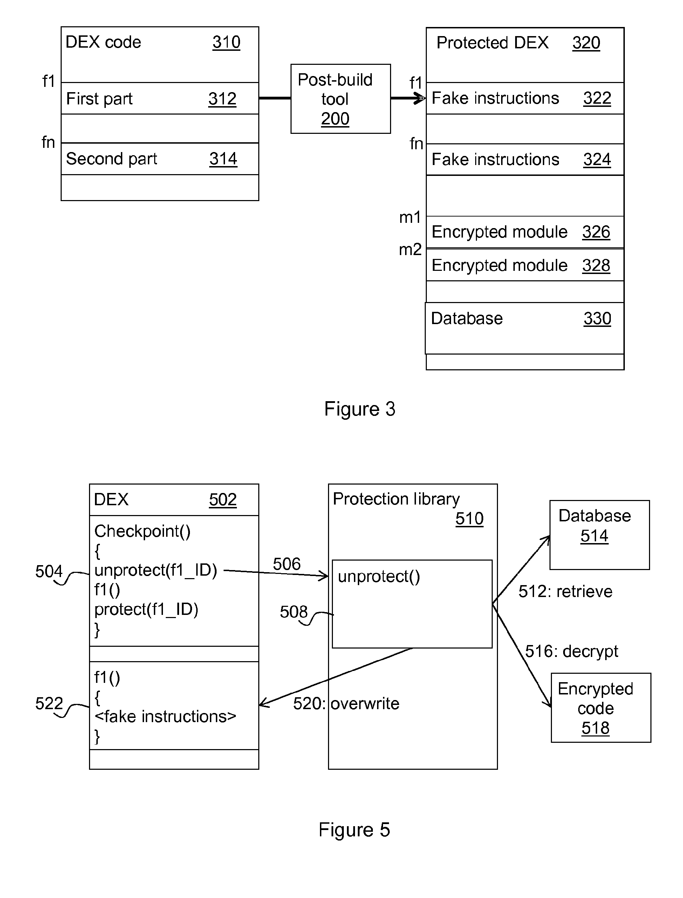

Figure 3 illustrates an example of how initial DEX code 310 is transformed by the post-build tool 200 into protected DEX code 320. The initial DEX code 310 includes, at offset f(1), a first part 312 and, at offset fn(), a second part 314 to protect. The protected DEX code 320 includes a first set of fake instructions 322 at offset f1() and a second set of fake instructions 324 at offset fn(), respectively replacing the first part 312 and the second part 314. The protected DEX code 320 also comprises a first encrypted module 326 at offset m1 and a second encrypted module 328 at offset m2, each encrypted module corresponding to a code part to protect. The protected DEX code 320 further includes a database 330 that holds information necessary to decrypt the encrypted modules.

Put another way, the fake instructions at the different offsets act as place holders for the decrypted code.

The protection library in the native library provides at least two public functions, one to unprotect and one to protect a secure encrypted module in memory.

The first function, unprotect(), prepares the execution of the protected code. This function receives the opaque and unique identifier as a parameter to identify the function (ex: method-id). When this function is called, the protection library retrieves the relevant information - the encryption seed, the initial offset and, possibly, the secure encrypted module offset - from the secure database for the entry that matches the current passed identifier (method-id). The protection library then computes the encryption key using the derivation function with the necessary input, for example the encryption seed and the DEX header, decrypts the selected secure encrypted module in a temporary buffer and copies the decrypted module to the DEX code initial offset. The decrypted module can then be executed.

The second function, protect(), restores the protection of the encrypted module, for which it is possible to perform the relevant parts of the protection - encryption and replacement by fake instructions - but it can suffice to replace the decrypted instructions with fake, valid instructions as long as the encrypted code is stored in the memory.

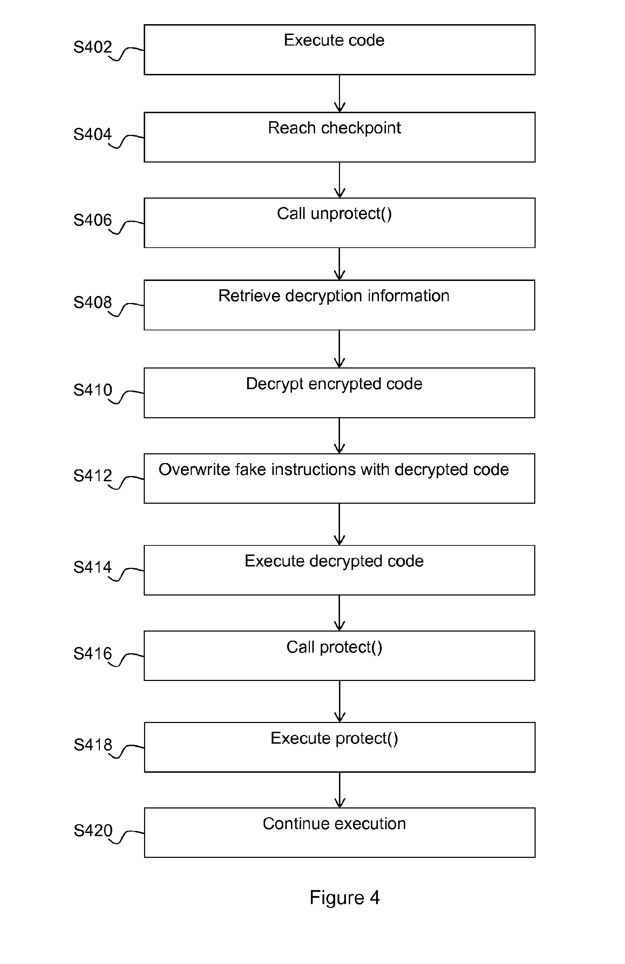

Figure 4 illustrates an exemplary method of execution of protected code. The method is performed by one or more processors (hereinafter processor), preferably located in a single device, during execution of the code. The processor executes S402 code, arrives S404 at a checkpoint and calls S406 the unprotect() function in the protection library with the identity of the function to unprotect as a parameter. The processor then retrieves S408 information regarding the function to unprotect from the database, decrypts S410 the protected function using the retrieved information and overwrites S412 fake instructions in the code with the unprotected function. Upon return from the unprotect() function, the processor executes S414 the unprotected function. Once the unprotected function has been executed, the program flow continues with a protect() function, which causes the processor to call S416 the protect() function in the protection library. The processor then executes S418 the protect() function in order to protect the unprotected function again after which the program flow continues S420.

Figure 5 illustrates code unprotection in a different way. The DEX 502, i.e. the code, includes a checkpoint 504 with a call 506 to an unprotect() function 508 in the protection library 510 with an identifier of a protected function f(1) as parameter, a call to the function f(1) and a call to a protect() function with the identifier of the protected function f(1) as parameter. Unprotect() includes instructions to retrieve 512 information for the function whose identifier was received from a database 514, instructions to use the retrieved unprotect information to decrypt 516 the encrypted code 518 of the function f(1), and instructions to overwrite 520 the fake instructions 522 in the DEX file with the decrypted code of the function f(1).

While the present solution has been described as applied to DEX code in an Android environment, it can be adapted to other operating systems that modify other kinds of code during installation.

It will thus be appreciated that the present disclosure provides code protection that can satisfy one or more of the following properties:
- Compliance with bytecode verifier and DEX optimizer. Encrypted code is not rejected during the Java check analysis at runtime by the DVM.
- Execution of the decoded byte code is done at an address that matches a valid class/method descriptor statically declared in the DEX header: same size of code, same numbers of registers.
- Generated decoded byte code is fully compliant with other data tables included in the DEX: method-ids, strings-id, data offsets, etc..
- Static protection is provided through the encryption of parts of code in the DEX file.
- Dynamic protection can be protected by having an encrypted part of code in the clear in the memory essentially only when the part of code is executed.
- The encryption/decryption key is protected against reverse engineering of the DEX code as it is not explicitly written in the code but rather obtained using a derivation function.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1. A device (200) for protecting an application comprising a code part to be protected, the device comprising:
an interface (214) configured to receive the application and to output a protected application; and
a processing unit (211) configured to:
- encrypt the code part to be protected to obtain a protected part using an encryption key;
- replace the code part to be protected by valid instructions different from the code part to be protected;
- store information necessary for decryption of the protected part so that the information may be used by an unprotection function configured to decrypt the protected part;
- store the unprotection function and a protection function so that the unprotection function and the protection function can be called by calling functions; and
- insert calls to the unprotection function and the protection function around a call to the code part to be protected in the application, the protection function being configured to protect the code part.

2. A method for protecting an application comprising a code part to be protected, the method comprising in a device (200) comprising a processor (211):
- encrypting (S104) the code part to be protected to obtain a protected part using an encryption key;
- replacing (S108) the code part to be protected by valid instructions different from the code part to be protected;
- storing (S110, S112) information necessary for decryption of the protected part so that the information may be retrieved by an unprotection function configured to decrypt the protected part;
- storing (S114) the unprotection function so that the unprotection function can be called by a calling function; and
- inserting (S114) calls to the unprotection function and a protection function around a call to the code part to be protected in the application, the protection function being configured to protect the code part.

3. The method of claim 2, wherein the information necessary for decryption of the protected part is stored in a non-executable part of the application.

4. The method of claim 2, further comprising storing the protection function in the application so that the protection function can be called by a calling function, the protection function being configured to overwrite a decrypted protected part in the memory by valid instructions.

5. The method of claim 2, wherein the unprotection function is stored in the application.

6. The method of claim 2, further comprising storing the protected part in a non-executable part of the application.

7. The method of claim 2, wherein the information necessary for decryption of the protected part comprises an encryption seed for the protected part, an offset of the code part to be protected and an identifier of a class name or a function name of the protected part.

8. The method of claim 2, wherein the application is implemented as Dalvik executable code.

9. A method for executing an application comprising a protected part, the method comprising in a device comprising a processor and memory:
- calling (S406) an unprotection function with an identifier of the protected part;
- retrieving (S408) information necessary for decryption of the protected part;
- decrypting (S410) the protected part using the information to obtain an unprotected part;
- overwriting (S412), in the memory, instructions in the application with the unprotected part;
- executing (S414) the unprotected part in the memory; and
- protecting (S418) the unprotected part in the memory.

10. A device for executing an application comprising a protected part, the device comprising:
- memory storing the application; and
- a processor configured to:
- call an unprotection function with an identifier of the protected part;
- retrieve information necessary for decryption of the protected part;
- decrypt the protected part using the information to obtain an unprotected part;
- overwrite, in the memory, instructions in the application with the unprotected part;
- execute the unprotected part in the memory; and
- protect the unprotected part in the memory.

11. A non-transitory storage medium on which is stored instructions that when executed by a processor causes to processor to:
- call an unprotection function with an identifier of the protected part;
- retrieve information necessary for decryption of the protected part;
- decrypt the protected part using the information to obtain an unprotected part;
- overwrite, in the memory, instructions in the application with the unprotected part;
- execute the unprotected part in the memory; and
- protect the unprotected part in the memory.
